# EUROPEAN PATENT SPECIFICATION

(11) **EP 2 021 379 B1**
(45) Date of publication and mention of the grant of the patent: **26.11.2014**
(21) Application number: 07762183.7
(22) Date of filing: 15.05.2007
(51) Int. Cl.: C08F 2/24, C08F 2/22, C08K 5/00

(54) **FLUORINATED SURFACTANTS**
FLUORIERTE TENSIDE
TENSIOACTIFS FLUORÉS

(30) Priority: 25.05.2006 US 420262
(43) Date of publication of application: 11.02.2009
(73) Proprietor: 3M Innovative Properties Company, St. Paul, MN 55133-3427 (US)
(72) Inventor: GUERRA, Miguel, A., Saint Paul, Minnesota 55133-3427 (US); HINTZER, Klaus, 84504 Burgkirchen (DE); JÜRGENS, Michael, 84504 Burgkirchen (DE); KASPAR, Harald, 84504 Burgkirchen (DE); MAURER, Andreas, R., 84504 Burgkirchen (DE); MOORE, George, G., I., Saint Paul, Minnesota 55133-3427 (US); QIU, Zai-ming, Saint Paul, Minnesota 55133-3427 (US); SCHULZ, Jay, F., Saint Paul, Minnesota 55133-3427 (US); SCHWERTFEGER, Werner, 84504 Burgkirchen (DE); ZIPPLIES, Tilman, C., 84504 Burgkirchen (DE)
(74) Representative: Kurz, Arnd
(86) International application number: PCT/US2007/068942
(87) International publication number: WO 2007/140112

(56) References cited:
- EP-A1- 0 755 947
- WO-A1-02/095121
- WO-A1-03/087179
- WO-A1-2004/067588
- JP-A- 2005 036 002
- US-A- 2 713 593

## Description

The present invention relates to fluorinated surfactants, aqueous compositions comprising fluorinated surfactants, method for preparing layered articles, and processes for preparing fluoropolymer dispersions.

Fluoropolymers, that is polymers having a fluorinated backbone, have been long known and have been used in a variety of applications because of several desirable properties such as heat resistance, chemical resistance, weatherability, UV-stability etc. The various fluoropolymers are for example described in "Modem Fluoropolymers", edited by John Scheirs, Wiley Science 1997. Commonly known or commercially employed fluoropolymers include polytetrafluoroethylene (PTFE), copolymers of tetrafluoroethylene (TFE) and hexafluoropropylene (HFP) (FEP polymers), perfluoroalkoxy copolymers (PFA), ethylene-tetrafluoroethylene (ETFE) copolymers, terpolymers of tetrafluoroethylene, hexafluoropropylene and vinylidene fluoride (VDF) (so called THV copolymers) and polyvinylidene fluoride polymers (PVDF). Commercially employed fluoropolymers also include fluoroelastomers and thermoplastic fluoropolymers.

Several methods are known for producing fluoropolymers. Such methods include suspension polymerization, aqueous emulsion polymerization, solution polymerization, polymerization in supercritical carbon dioxide, and polymerization in the gas phase. Suspension polymerization and aqueous emulsion polymerization are among the most widely used techniques commercially. Suspension polymerization generally does not involve the use of surfactant and usually results in larger polymer particles than obtained through aqueous emulsion polymerization.

While a variety of surfactant-free aqueous emulsion polymerizations have been described, a need still exists to produce fluoropolymers in aqueous emulsion polymerization processes in the presence of fluorinated surfactants. Aqueous emulsion polymerization in the presence of fluorinated surfactants can yield relatively stable fluoropolymer particle dispersions in high yield, and is generally considered more environmentally friendly than polymerizations in organic solvents.

Aqueous emulsion polymerization to yield fluoropolymers is often carried out using a perfluoroalkanoic acid or salt thereof as a surfactant. While these surfactants can provide a high speed of polymerization, good polymerization properties of the fluoropolymers obtained, and good dispersion stability, environmental concerns have been raised against these surfactants.

Fluorinated carboxylic acid derivatives as surfactants for the production of fluoropolymers are known from JP 2005-36002 A.

The present application recognizes a need to find alternative emulsion polymerization processes in which the use of perfluoroalkanoic acids and salts thereof as a fluorinated surfactant can be diminished or avoided. The present application recognizes the need for alternative surfactants, in particular, those that have less environmental impact.

Accordingly, in some embodiments, the surfactants described herein display a low toxicity and/or show no or only little bioaccumulation. In this context, low toxicity refers to low acute toxicity, related to body weight, liver weight, other clinical signs (such as unusual activity, behavior and other abnormal central nervous system disorders and the like) and mortality. Furthermore, in some embodiments, the surfactants described herein have good chemical and thermal stability, enabling their use in emulsion polymerizations over a wide range of conditions (for example temperature and/or pressure). The surfactants described herein also allow for high polymerization rates, good dispersion stability, good fluoropolymer yields, and good polymerization properties. The surfactants described herein may also be recovered from a fluoropolymer dispersion and/or from wastewater following aqueous emulsion polymerization employing the surfactants.

In other embodiments, dispersions described herein have good or excellent properties in coating applications and/or in impregnation of substrates, including, for example, good film-forming properties.

In some embodiments, the aqueous emulsion polymerization processes described herein can be carried out in a convenient and cost-effective way using equipment commonly used in the aqueous emulsion polymerization of fluorinated monomers.

In one aspect, the present invention relates to a surfactant for emulsion polymerization comprising a fluorinated ether carboxylic acid or acid derivative selected from:
a) a partially fluorinated surfactant having the general formula:

   [R_{f}¹-O-(CF₂)ₙ-CO₂⁻]ᵢMⁱ⁺

   wherein R_{f}¹ is CF₃CFH; n is an integer selected from 1, 2, 5, and 6; M is a cation having a valence of i; and i is selected from 1, 2, and 3,
b) a perfluorinated ethyl ether surfactant having the general formula:

   [R_{f}²-O-(CF₂)ₘ-CO₂⁻]ᵢMⁱ⁺

   wherein R_{f}² is CF₃CF₂; m is an integer selected from 1, 3, 4, and 6; M is a cation having a valence of i; and i is selected from 1, 2, and 3, and
c) a perfluorinated butyl ether surfactant having the general formula:

   [R_{f}³-O-(CF₂)ₚ-CO₂⁻]ᵢMⁱ⁺
wherein R_{f}³ is CF₃(CF₂)₃; p is an integer selected from 1, 4, and 6; M is a cation having a valence of i; and i is selected from 1, 2, and 3. Examples of cations Mⁱ⁺ include H⁺, ammonium ions such as NH₄⁺ or tetra-alkyl ammonium ions, metal cations such as alkali metal ions, including sodium, potassium, lithium, and alkali earth cations, including calcium and magnesium. Preferred cations are H⁺ and ammonium.

In another aspect, the present invention relates to an aqueous composition comprising a fluorinated surfactant selected from:
a) a partially fluorinated surfactant having the general formula:

   [R_{f}¹-O-(CF₂)ₙ-CO₂⁻]ᵢMⁱ⁺

   wherein R_{f}¹ is CF₃CFH; n is an integer selected from 1 to 6; M is a cation having a valence of i; and i is selected from 1, 2, and 3,
b) a perfluorinated ethyl ether surfactant having the general formula:

   [R_{f}²-O-(CF₂)ₘ-CO₂⁻]ᵢMⁱ⁺

   wherein R_{f}² is CF₃CF₂; m is an integer selected from 1, 3, 4, 5, and 6; M is a cation having a valence of i; and i is selected from 1, 2, and 3, and
c) a perfluorinated butyl ether surfactant having the general formula:

   [R_{f}³-O-(CF₂)ₚ-CO₂⁻]ᵢMⁱ⁺
wherein
R_{f}³ is CF₃(CF₂)₃; p is an integer selected from 1, 4, and 6; M is a cation having a valence of i; and i is selected from 1, 2, and 3. Examples of cations Mⁱ⁺ include H⁺, ammonium ions such as NH₄⁺ or tetra-alkyl ammonium ions, metal cations such as alkali metal ions, including sodium and potassium, and alkali earth cations, including calcium and magnesium.

In yet another aspect, the present invention relates to a process for preparing a fluoropolymer dispersion comprising polymerizing in an aqueous emulsion, one or more fluorinated monomers, wherein the polymerization is carried out in the presence of one or more fluorinated surfactants selected from:
a) a partially fluorinated surfactant having the general formula:

   [R_{f}¹-O-(CF₂)ₙ-CO₂]ᵢMⁱ⁺ (A)

   wherein R_{f}¹ is CF₃CFH; n is an integer selected from 1 to 6; M is a cation having a valence of i; and i is selected from 1, 2, and 3,
b) a perfluorinated ethyl ether surfactant having the general formula:

   [R_{f}²-O-(CF₂)ₘ-CO₂⁻]ᵢMⁱ⁺ (B)

   wherein R_{f}² is CF₃CF₂; m is an integer selected from 1, 3, 4, 5, and 6; M is a cation having a valence of i; and i is selected from 1, 2, and 3, and
c) a perfluorinated butyl ether surfactant having the general formula:

   [R_{f}³-O-(CF₂)ₚ-CO₂⁻]ᵢMⁱ⁺ (C)

   wherein R_{f}³ is CF₃(CF₂)₃; p is an integer selected from 1, 4, and 6; M is a cation having a valence of i; and i is selected from 1, 2, and 3. Examples of cations Mⁱ⁺ include H⁺, ammonium ions such as NH₄⁺ or tetra-alkyl ammonium ions, metal cations such as alkali metal ions, including sodium and potassium, and alkali earth cations, including calcium and magnesium.

### Detailed Description

The surfactants described herein have been found to be suitable in the aqueous emulsion polymerization of monomers, in particular fluorinated monomers. In addition to their use in aqueous emulsion polymerization, the fluorinated surfactants may be useful in other applications where surfactants are used, such as for example in coating compositions or in stabilizing dispersions, including for example fluoropolymer dispersions.

It has been found that the surfactants described herein can be easily and conveniently prepared in a cost effective way. For instance, the preparation of a partially fluorinated surfactant having the general formula:

[R_{f}¹-O-(CF₂)ₙ-CO₂⁻]ᵢMⁱ⁺

wherein R_{f}¹ is CF₃CFH; n is an integer selected from 1, 2, 5, and 6; M is a cation having a valence of i; and i is selected from 1, 2, and 3, can be carried out by first, fluorination of an organic molecule as disclosed in the reaction scheme (I) below. Fluorination can be either electrochemical fluorination (ECF) or direct fluorination (DF). For instance, the following fluorination reactions may be carried out by Reaction (I):

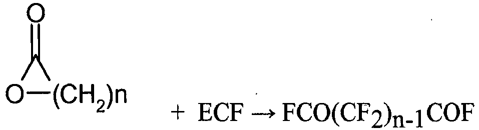

CH₃OCO(CH₂)ₙCOOCH₃ + ECF or DF → FCO(CF₂)ₙCOF

where, for the purposes of Reaction (I), n can be any integer, for instance, from 1 to 6. General procedures for carrying out ECF are described, for instance, in US Patent No. 2,713,593 and WO 98/50603. General procedures for carrying out DF are described, for instance, in U.S. Patent No. 5,488,142.

In the alternative, the first step may involve a coupling reaction of hexafluoropropylene oxide. For instance, by Reaction (II):

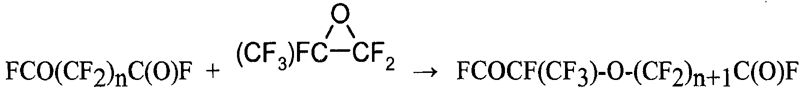

The di-acid fluoride formed by Reaction (II) can then be converted to a partially fluorinated surfactant by decarboxylation with base in the presence of water. This can be generally depicted as Reaction (III):

FCOCF(CF₃)-O-(CF₂)ₙ₊₁C(O)F + H₂O + (base) → CF₃-CHF-O-(CF₂)ₙ₊₁CO₂M

where the base can be a metal hydroxide or metal carbonate and M is a metal cation such as alkali metal ions, including sodium and potassium, and alkali earth cations, including calcium and magnesium.

In some embodiments, the partially fluorinated surfactants of the present invention may have the general formula:

[R_{f}¹-O-(CF₂)ₙ-CO₂⁻]ᵢMⁱ⁺

wherein R_{f}¹ is CF₃CFH; n is an integer selected from 1, 2, 5, and 6; M is a cation having a valence of i; and i is selected from 1, 2, and 3. In some embodiments, n is selected from 1 and 2. In other embodiments, n is selected from 5 and 6.

Specific examples of partially fluorinated surfactants include:
CF₃CFH-O-CF₂CO₂H
CF₃CFH-O-(CF2)₂CO₂H
CF₃CFH-O-(CF₂)₃CO₂H
CF₃CFH-O-(CF₂)₄CO₂H
CF₃CFH-O-(CF₂)₅CO₂H
CF₃CFH-O-(CF₂)₆CO₂H

In other embodiments, the perfluorinated ethyl ether surfactant having the general formula:

[R_{f}²-O-(CF₂)ₘ-CO₂⁻]ᵢMⁱ⁺

wherein R_{f}² is CF₃CF₂; m is an integer selected from 1, 3, 4, and 6; M is a cation having a valence of i; and i is selected from 1, 2, and 3, and the perfluorinated butyl ether surfactant having the general formula:

[R_{f}³-O-(CF₂)ₚ-CO₂⁻]ᵢMⁱ⁺

wherein R_{f}³ is CF₃(CF₂)₃; p is an integer selected from 1, 4, and 6; M is a cation having a valence of i; and i is selected from 1, 2, and 3, may each be prepared by convenient synthetic routes. First, preparation of an acid fluoride may be carried out, for instance, by reaction of an ether precursor with SbF₅ in oxygen:

R_{f}O-(CF₂)ₓCF=CF₂ + SbF₅ (O₂) → R_{f}-O-(CF₂)ₓ₊₁-COF + H₂O → R_{f}-O-(CF₂)ₓ₊₁-COOH

where R_{f} is CF₃CF₂ or CF₃(CF₂)₃, and x is 0 to 5, where it is preferred that x is 0. One of ordinary skill in the art will recognize the general applicability of this synthetic preparatory route to make carboxylic acid ethers of various R_{f} values and x values.

Another generally applicable synthetic route providing the perfluorinated ethyl ether surfactants and perfluorinated butyl ether surfactants of the present invention involves the following reaction sequence:

R'_{f}-COF + KF + Br(CH₂)ₙ-CO₂R → R'_{f}CF₂-O-(CH₂)ₙ-CO₂R

where R'_{f} is CF₃ or CF₃(CF₂)₂ and n is, for instance, 1 to 6. The partially hydrogenated ester formed can then be fluorinated, and, after hydrolysis, yields the carboxylic acid:

R'_{f}CF₂-O-(CH₂)ₙ-CO(R) + (1) F₂; (2) hydrolysis → R'_{f}CF₂-O-(CF₂)ₙ-CO₂H

where, for this formula, R is selected from a halogen, including fluorine, and an alkoxy group, including linear, branched or cyclic alkoxy groups and where the alkoxy group may be non-fluorinated or partially fluorinated.

In some embodiments, the perfluorinated ethyl ether surfactant has the general formula:

[R_{f}²-O-(CF₂)ₘ-CO₂⁻]ᵢMⁱ⁺

wherein R_{f}² is CF₃CF₂; m is an integer selected from 1, 3, 4, and 6; M is a cation having a valence of i; and i is selected from 1, 2, and 3. In particular embodiments, m is selected from 3, 4, and 6.

Specific examples of perfluorinated ethyl ether surfactants include:
CF₃CF₂-O-CF₂CO₂H
CF₃CF₂-O-(CF2)₂CO₂H,
CF₃CF₂-O-(CF₂)₃CO₂H
CF₃CF₂-O-(CF₂)₄CO₂H
CF₃CF₂-O-(CF₂)₅CO₂H
CF₃CF₂-O-(CF₂)₆CO₂H

The perfluorinated butyl ether surfactant may, in some embodiments, have the general formula:

[R_{f}³-O-(CF₂)ₚ-CO₂⁻]ᵢMⁱ⁺

wherein R_{f}³ is CF₃(CF₂)₃; p is an integer selected from 1, 4, and 6; M is a cation having a valence of i; and i is selected from 1, 2, and 3. In particular embodiments, p is selected from 4 and 6.

Specific examples of perfluorinated butyl ether surfactants include:
CF₃(CF₂)₃-O-CF₂CO₂H
CF₃(CF₂)₃-O-(CF₂)₂CO₂H
CF₃(CF₂)₃-O-(CF₂)₃CO₂H
CF₃(CF₂)₃-O-(CF₂)₄CO₂H
CF₃(CF₂)₃-O-(CF₂)₅CO₂H
CF₃(CF₂)₃-O-(CF₂)₆CO₂H

In some embodiments, the partially fluorinated surfactants, the perfluorinated ethyl ether surfactants, and the perfluorinated butyl ether surfactants described herein display desirable environmental properties. For instance, in some embodiments, the surfactant has a low potential for bioaccumulation and is readily eliminated from a mammalian source, as exemplified by renal elimination half-life of the surfactant from a male rat. The half-life may be, in some embodiments, 35 hours or less, 30 hours or less, 24 hours or less, or even 12 hours or less. In other embodiments, the surfactants described herein do not undergo metabolic degradation. Further, the surfactants may have a low potential for mammalian bioaccumulation, as exemplified by recovery of the surfactant from a male rat 96 hours after dose via renal elimination. The recovery ratio may be, in some embodiments, 30% or greater, 45% or greater, 50% or greater, 75% or greater, or even as high as 90% or greater. Generally, fluorinated carboxylic acids in which each of the fluorinated aliphatic moieties in the compound have not more than 3 carbon atoms fulfill the aforementioned conditions of recovery and half-life time.

The present invention also provides a process for preparing a fluoropolymer dispersion. The process comprises polymerizing in an aqueous emulsion, one or more fluorinated monomers. In one embodiment, the polymerizing may be carried out in the presence of one or more partially fluorinated surfactants having the general formula:

[R_{f}¹-O-(CF₂)ₙ-CO₂]ᵢMⁱ⁺

wherein R_{f}¹ is CF₃CFH; n is an integer selected from 1 to 6; M is a cation having a valence of i; and i is selected from 1, 2, and 3. In another embodiment, the polymerizing may be carried out in the presence of a perfluorinated ethyl ether surfactant having the general formula:

[R_{f}²-O-(CF₂)ₘ-CO₂⁻]ᵢMⁱ⁺

wherein R_{f}² is CF₃CF₂; m is an integer selected from 1, 3, 4, 5, and 6; M is a cation having a valence of i; and i is selected from 1, 2, and 3. In yet another embodiment, the polymerizing may be carried out in the presence of a perfluorinated butyl ether surfactant having the general formula:

[R_{f}³-O-(CF₂)ₚ-CO₂⁻]ᵢMⁱ⁺

wherein R_{f}³ is CF₃(CF₂)₃; p is an integer selected from 1, 4, and 6; M is a cation having a valence of i; and i is selected from 1, 2, and 3. The process may also be carried out in the presence of any combination of the fluorinated surfactants described above.

In a particular embodiment, one or more fluorinated surfactants of formula (I) are used in the aqueous emulsion polymerization of one or more fluorinated monomers, in particular gaseous fluorinated monomers. By gaseous fluorinated monomers is meant monomers that are present as a gas under the polymerization conditions. The polymerization of the fluorinated monomers may be started in the presence of the fluorinated surfactant according to formula (A) to (C), that is the polymerization is initiated in the presence of the fluorinated surfactant. The amount of fluorinated surfactant used may vary depending on desired properties such as amount of solids and particle size. Generally the amount of fluorinated surfactant will be between 0.001% by weight based on the weight of water in the polymerization and 5% by weight, for example between 0.005% by weight and 2% by weight. A practical range is between 0.05% by weight and 1% by weight. While the polymerization is generally initiated in the presence of the fluorinated surfactant, it is not excluded to add further fluorinated surfactant during the polymerization although such will generally not be necessary. Nevertheless, it may be desirable to add certain monomer to the polymerization in the form of an aqueous emulsion. For example, fluorinated monomers and in particular perfluorinated co-monomers that are liquid under the polymerization conditions may be advantageously added in the form of an aqueous emulsion which may be a microemulsion. Such emulsion of such comonomers may be prepared using the fluorinated surfactant according to formula (A) to (C) above, as an emulsifier.

Furthermore, the aqueous dispersion may further comprise one or more fluorinated surfactants other than the fluorinated surfactants described above. The other fluorinated surfactants may include, for instance, perfluoroalkyl carboxylic acids. Also contemplated as other fluorinated surfactants are perfluoropolyether surfactants. In yet further embodiments, the aqueous dispersion may further comprise one or more non-fluorinated surfactants.

The aqueous emulsion polymerization may be carried out at a temperature between 10 to 150°C, preferably 20°C to 110°C and at a pressure of typically between 2 and 30 bar, in particular 5 to 20 bar. The reaction temperature may be varied during the polymerization to influence the molecular weight distribution, that is, to obtain a broad molecular weight distribution or to obtain a bimodal or multimodal molecular weight distribution.

The pH of the polymerization media may be in the range of pH 2 - 11, preferably 3 - 10, most preferably 4 - 10.

The aqueous emulsion polymerization is typically initiated by an initiator including any of the initiators known for initiating a free radical polymerization of fluorinated monomers. Suitable initiators include peroxides and azo compounds and redox based initiators. Specific examples of peroxide initiators include hydrogen peroxide, sodium or barium peroxide, diacylperoxides such as diacetylperoxide, disuccinyl peroxide, dipropionylperoxide, dibutyrylperoxide, dibenzoylperoxide, benzoylacetylperoxide, diglutaric acid peroxide and dilaurylperoxide, and further per-acids and salts thereof such as for example ammonium, sodium or potassium salts. Examples of per-acids include peracetic acid. Esters of the peracid can be used as well and examples thereof include tert.-butylperoxyacetate and tert.-butylperoxypivalate. Examples of inorganic include for example ammonium- alkali- or earth alkali salts of persulfates, permanganic or manganic acid or manganic acids. A persulfate initiator, for example ammonium persulfate (APS), can be used on its own or may be used in combination with a reducing agent. Suitable reducing agents include bisulfites such as for example ammonium bisulfite or sodium metabisulfite, thiosulfates such as for example ammonium, potassium or sodium thiosulfate, hydrazines, azodicarboxylates and azodicarboxyldiamide (ADA). Further reducing agents that may be used include sodium formaldehyde sulfoxylate (Rongalit®) or fluoroalkyl sulfinates as disclosed in US Patent No. 5,285,002. The reducing agent typically reduces the half-life time of the persulfate initiator. Additionally, a metal salt catalyst such as for example copper, iron or silver salts may be added. The amount of initiator may be between 0.01% by weight (based on the fluoropolymer solids to be produced) and 1% by weight. In one embodiment, the amount of initiator is between 0.05 and 0.5% by weight. In another embodiment, the amount may be between 0.05 and 0.3% by weight.

The aqueous emulsion polymerization system may further comprise other materials, such as buffers and, if desired, complex-formers or chain-transfer agents. Examples of chain transfer agents that can be used include dimethyl ether, methyl t-butyl ether, alkanes having 1 to 5 carbon atoms such as ethane, propane and n-pentane, halogenated hydrocarbons such as CCl₄, CHCl₃ and CH₂Cl₂ and hydrofluorocarbon compounds such as CH₂F-CF₃ (R134a). Additionally esters like ethylacetate, malonic esters are applicable.

Examples of fluorinated monomers that may be polymerized using the fluorinated surfactant according to formula (I) as an emulsifier include partially or fully fluorinated gaseous monomers including fluorinated olefins such as tetrafluoroethylene (TFE), chlorotrifluoroethylene (CTFE), hexafluoropropylene (HFP), vinyl fluoride (VF), vinylidene fluoride (VDF), partially or fully fluorinated allyl ethers and partially or fully fluorinated vinyl ethers. The polymerization may further involve non-fluorinated monomers such as ethylene and propylene.

Further examples of fluorinated monomers that may be used in the aqueous emulsion polymerization according to the invention include those corresponding to the formula:

CF₂=CF-O-R_{f}

wherein R_{f} represents a perfluorinated aliphatic group that may contain one or more oxygen atoms. Preferably, the perfluorovinyl ethers correspond to the general formula:

CF₂=CFO(R_{f}O)ₙ (R'_{f}O)ₘR"_{f}

wherein R_{f} and R'_{f} are different linear or branched perfluoroalkylene groups of 2-6 carbon atoms, m and n are independently 0-10, and R"_{f} is a perfluoroalkyl group of 1-6 carbon atoms. Examples of perfluorovinyl ethers according to the above formulas include perfluoro-2-propoxypropylvinyl ether (PPVE-2), perfluoro-3-methoxy-n-propylvinyl ether, perfluoro-2-methoxy-ethylvinyl ether, perfluoromethylvinyl ether (PMVE), perfluoro-n-propylvinyl ether (PPVE-1) and CF₃-(CF₂)₂-O-CF(CF₃)-CF₂-O-CF(CF₃)-CF₂-O-CF=CF₂.

Examples of fluorinated allyl ethers that can be used include those corresponding to the general formula:

CF₂=CF-CF₂-O-R_{f}

wherein R_{f} represents a perfluorinated aliphatic group that may contain one or more oxygen atoms.

Still further, the polymerization may involve comonomers that have a functional group such as for example a group capable of participating in a peroxide cure reaction. Such functional groups include halogens such as Br or I as well as nitrile groups. Specific examples of such comonomers that may be listed here include
(a) bromo- or iodo- (per)fluoroalkyl-(per)fluorovinylethers having the formula:

   Z-R_{f}-O-CX=CX₂

   wherein each X may be the same or different and represents H or F, Z is Br or I, R_{f} is a (per)fluoroalkylene C₁-C₁₂, optionally containing chlorine and/or ether oxygen atoms; for example: BrCF₂-O-CF=CF₂, BrCF₂CF₂-O-CF=CF₂, BrCF₂CF₂CF₂-O-CF=CF₂, CF₃CFBrCF₂-O-CF=CF₂, and the like; and
(b) bromo- or iodo containing fluoroolefins such as those having the formula:

   Z'-(R_{f}')ᵣ-CX=CX₂,
wherein each X independently represents H or F, Z' is Br or I, R_{f}' is a perfluoroalkylene C₁-C₁₂, optionally containing chlorine atoms and r is 0 or 1; for instance: bromotrifluoroethylene, 4-bromo-perfluorobutene-1, and the like; or bromofluoroolefins such as 1-bromo-2,2-difluoroethylene and 4-bromo-3,3,4,4-tetrafluorobutene-1.

Examples of nitrile containing monomers that may be used include those that correspond to one of the following formulas:

CF₂=CF-CF₂-O-R_{f}-CN

CF₂=CFO(CF₂)_{L}CN

CF₂=CFO[CF₂CF(CF₃)O]_{g}(CF₂)ᵥOCF(CF₃)CN

CF₂=CF[OCF₂CF(CF₃)]ₖO(CF₂)ᵤCN

wherein L represents an integer of 2 to 12; g represents an integer of 0 to 4; k represents 1 or 2; v represents an integer of 0 to 6; u represents an integer of 1 to 6, R_{f} is a perfluoroalkylene or a bivalent perfluoroether group. Specific examples of nitrile containing liquid fluorinated monomers include perfluoro(8-cyano-5-methyl-3,6-dioxa-1-octene), CF₂=CFO(CF₂)₅CN, and CF₂=CFO(CF₂)₃OCF(CF₃)CN.

The aqueous emulsion polymerization may be used to produce a variety of fluoropolymers including perfluoropolymers, which have a fully fluorinated backbone, as well as partially fluorinated fluoropolymers. Also the aqueous emulsion polymerization may result in melt-processible fluoropolymers as well as those that are not melt-processible such as for example polytetrafluoroethylene and so-called modified polytetrafluoroethylene. The polymerization process can further yield fluoropolymers that can be cured to make fluoroelastomers as well as fluorothermoplasts. Fluorothermoplasts are generally fluoropolymers that have a distinct and well noticeable melting point, typically in the range of 60 to 320°C or between 100 and 320°C. They thus have a substantial crystalline phase. Fluoropolymers that are used for making fluoroelastomers typically are amorphous and/or have a neglectable amount of crystallinity such that no or hardly any melting point is discernable for these fluoropolymers.

The aqueous emulsion polymerization results in a dispersion of the fluoropolymer in water. Generally the amount of solids of the fluoropolymer in the dispersion directly resulting from the polymerization will vary between 3 % by weight and 40% by weight depending on the polymerization conditions. A typical range is between 5 and 30% by weight, for example between 10 and 25% by weight. The particle size (volume average diameter) of the fluoropolymer is typically between 40nm and 400nm with a typical particle size being between 60nm and 350nm. The total amount of fluorinated surfactant according to formula (I) in the resulting dispersion is typically between 0.001 and 5% by weight based on the amount of fluoropolymer solids in the dispersion. A typical amount may be from 0.01 to 2% by weight or from 0.02 to 1% by weight.

In accordance with a particular embodiment the fluoropolymer is isolated from the aqueous dispersion by for example coagulation. After such coagulation a substantial portion of the fluorinated surfactant typically remains on the fluoropolymer. When the fluoropolymer is heated for the purpose of drying, the fluorinated surfactant is volatilized and carried away in the dryer or oven exhaust gas. To avoid release of the fluorinated carboxylic acid into the environment, the exhaust gas may be contacted with, for example, a scrubber solution or liquid to recover the fluorinated surfactant from the exhaust gas stream, also called off-gas stream.

The recovery of the fluorinated surfactants from exhaust gas streams provides an economical and environmental advantage through the re-use of the surfactants in the emulsion polymerization of fluorinated monomers. Thus, in another embodiment, the present invention provides a process for the recovery of the fluorinated surfactants described herein from exhaust gas streams, the process comprising contacting the exhaust gas stream with a composition capable of at least partially removing the fluorinated surfactant from the exhaust gas stream.

The process described for the recovery of fluorinated surfactants allows for the recovery of the "carboxylic acid" of the fluorinated surfactants. For the sake of convenience, the term "fluorinated carboxylic acid" may be used to refer to the free acid as well as salts thereof. The fluorinated surfactants used in the process of recovery may be any of the fluorinated surfactants described in the present application.

In accordance with the present invention, an exhaust gas stream containing a fluorinated surfactant may be contacted with a composition capable of at least partially removing the fluorinated surfactant from the exhaust gas stream. For convenience, the composition capable of at least partially removing the fluorinated surfactant will be referred to hereinafter as "scrubber composition".

In accordance with one embodiment, the scrubber composition is a scrubber liquid. The exhaust gas is typically contacted with the scrubber liquid at a temperature so as to maximize solubility of the fluorinated surfactant in the scrubber liquid. A typical temperature range may be from 10°C to 80°C. Scrubber liquids include aqueous liquids such as demineralised water, aqueous alkaline solutions and organic solvents such as for example glycol ether solvents. Suitable aqueous alkaline solutions include diluted alkali solution and high-density alkali solutions. The latter may cause the fluorinated surfactants to separate out as a separate phase, thus allowing easy recovery and recycling of the fluorinated surfactants.

In a particular embodiment, the density of the alkaline scrubbing solution is set to a value which is higher than the density of the precipitating salts of fluorinated surfactant, so that these separate out as an upper phase on the high-density scrubbing solution in a settling tank and are ejected. The scrubbing solution may be taken off at the bottom and returned directly to the scrubbing process. The density of the alkaline scrubbing solution should generally be above 1.15 g/cm³, preferably above 1.3 g/cm³, depending on the temperature in the scrubber.

Typically, the alkaline compound selected is an alkali metal hydroxide, preferably potassium hydroxide solution and in particular sodium hydroxide solution, the concentration being such that the density is above 1.15 g/cm³. With potassium hydroxide solution, this is generally the case at a concentration of above 16% and with sodium hydroxide solution this is generally the case at a concentration of above 14%. Mixtures of different alkalis are also possible.

If lower concentrations of alkali metal hydroxide are desired, the scrubbing solution density of at least 1.15 g/cm³ can also be achieved by addition of a salt. Salts that may be used are quite generally inorganic compounds that do not form sparingly soluble hydroxides in the alkaline environment. These are, in particular, alkali metal salts such as sodium or potassium chloride, bromide or sulfate. However, since chloride ions can cause corrosion when metals are used as material for the work-up equipment, other salts, such as sulfates, are generally preferred to set the density of the scrubbing solution. Advantageously, a salt is selected having the same cation as the alkaline compound, when sodium hydroxide solution is used, therefore, preferably sodium sulfate. Mixtures of salts are also possible. The lighter, upper phase containing the salts of the highly fluorinated carboxylic acids occurs in the form of a salt paste to which alkaline aqueous medium, that is alkali metal hydroxide and, if appropriate, also the added salt, still adheres.

In a particular embodiment, a potassium carbonate solution having a density of at least 1.15 g/cm³ is used as a scrubbing composition. The density may for example be from 1.2 to 1.4 g/cm³. If the upper phase which has separated out is collected, for example in a tank, it is generally observed, that after standing for several hours, further enrichment of the salts of the highly fluorinated carboxylic acids occurs, by at least two phases forming again. By analysis, it is established in which phase the salts of the fluorinated surfactants are contained and the other phases are preferably returned to the process.

In some embodiments, an aqueous solution of alkali hydroxide having a concentration of the alkali hydroxide between 0.01 and 10% by weight, is used such as for example sodium or potassium hydroxide solutions.

In another embodiment, demineralised water is used as the scrubber liquid. In this case, the scrubber solution is preferably re-circulated until the fluorinated surfactant concentration reaches 500 to 5000 parts per million by weight (ppm), more preferably 1000 to 4000 ppm, and most preferably 2000 to 3000 ppm. Foaming in the scrubber system typically provides a practical limit for the concentration of fluorinated surfactant in the scrubber solution.

The scrubber solution may then be concentrated. Preferably this is accomplished by passing the scrubber solution through one or more reverse-osmosis (RO) units to increase the concentration of fluorinated surfactant to 1 to 35 wt. %, more preferably 5 to 30 wt. %, even more preferably 10 to 25 wt. %, and most preferably 20±5 wt. %. The nature of the membrane in the RO units may require adjustment of the pH of the scrubber solution to operate efficiently. The resulting concentrated scrubber solution typically also contains several hundred ppm of fluoride ion, and frequently has a color that varies from light tan to brown, indicative of other impurities, including organic impurities. The color, as measured by the APHA color test, described below, is typically from 50 to 300.

Therefore the recovered concentrated scrubber solution should preferably be contacted with alumina to reduce fluoride concentration. This may be done, for example, by passing the concentrated scrubber solution through a bed packed with alumina, the preferred method, or by slurrying the fluorinated surfactant solution with alumina and then separating the solution from the alumina. This solution is referred to herein as recovered fluorinated surfactant solution. The temperature of concentrated scrubber solution during the alumina treatment may be from 5° C to 90° C, preferably 10° C to 50° C, and more preferably 15° C to 30° C. Contact time if the alumina bed method is used is somewhat dependent upon temperature but is in the range of 5 to 60 minutes. The concentrated scrubber solution feed to the alumina preferably has a pH of 4 to 7, more preferably at 5 to 6.

The so-obtained recovered fluorinated surfactant may be re-used in the polymerization of fluorinated monomers.

Alternatively, the scrubber solution, which may or may not have been concentrated, may be contacted with adsorbent particles to adsorb the fluorinated surfactant from the scrubber solution. By the term 'adsorbent particles' in connection with the present invention is meant particles that are capable of physically adsorbing the fluorinated surfactant by whatever mechanism of physical adsorption including but not limited to ionic interactions causing physical adsorption. Accordingly, the term 'adsorbent particles' include ion exchange resins, which typically bind fluorinated surfactants having ionic groups as a result of an ion exchange process although the adsorption to the exchange resin may also occur by a physical adsorption process other than the ion exchange process.

Suitable adsorbent particles further include activated carbon, silica gel, clays and zeolites. Conveniently used are activated carbon particles. The shape of the adsorbent particles is not particularly critical. For example, the adsorbent particles may have a plate shape, can be spherical, cylindrical or they can be rods. Also, adsorbent particles having a variety of different shapes may be used as a mixture. The size of the adsorbent particles is typically between 0.05mm and 20mm, generally between 0.1 and 10mm. A practical range is between 0.5 and 5mm. The adsorbent particles typically adsorb the fluorinated acid surfactant on their surface and it will thus generally be preferred to optimize the specific surface area of the particles, that is the amount of surface per unit of weight. Typically, the specific surface area of the adsorbent particles will be between 10 and 5000 m²/g, generally between 100 and 3000 m²/g with a practical range being from 300 to 2000 m²/g.

Additionally, anion exchange resin particles can be used as adsorbent particles. Examples of anion exchange resin that can be used to adsorb a fluorinated surfactant include strong, medium as well as weak basic anion exchange resins. The terms strong, medium strong and weak basic anion exchange resin are defined in "Encyclopedia of Polymer Science and Engineering", John Wiley & Sons, 1985, Volume 8, page 347 and "Kirk-Othmer", John Wiley & Sons, 3rd edition, Volume 13, page 687. Strong basic anion exchange resins typically contain quaternary ammonium groups, medium strong resins usually have tertiary amine groups and weak basic resins usually have secondary amines as the anion exchange functions. Examples of anion exchange resins that are commercially available for use in this invention include AMBERLITE® IRA-402, AMBERJET® 4200, AMBERLITE® IRA-67 and AMBERLITE® IRA-92 all available from Rohm & Haas, PUROLITE® A845 (Purolite GmbH) and LEWATIT® MP-500 (Bayer AG).

According to a further embodiment, an aqueous scrubber liquid may be used that includes a quaternary ammonium salt of the general formula:

R₄N⁺ A⁻

wherein each R-group independently represents a aliphatic or aromatic hydrocarbon group and wherein A⁻ represents an anion. Typical R-groups include alkyl groups of 1 to 16 carbon atoms, aryl of 6-10 carbon atoms or aralkyl of 7-11 carbon atoms. Typically, the sum of the carbon atoms in the R-groups equals at least 15. Typically, the anion is a halide anion such as chloride or bromide but any other anion may be useful as well.

Examples of quaternary ammonium compounds according to the above formula include, for instance, di-n-decyldimethylammonium chloride, hexadecyltrimethylammonium chloride, n-tetradecylbenzyldimethylammonium chloride, n-octyldodecyldimethylammonium chloride, and the like. The analogous bromides may also be used. Typically, the ammonium compound will form the corresponding ammonium salt of the fluorinated surfactant when the exhaust gas stream is contacted with a scrubber liquid containing the ammonium compound. The so-formed ammonium salt of the fluorinated surfactant may then be recovered from the scrubber solution by extraction with an organic solvent, typically a chlorinated solvent. In one embodiment, the extraction step is carried out by adding a chlorinated hydrocarbon liquid (liquid at ordinary room temperature, that is, about 22°C.). Examples of chlorinated hydrocarbon liquids include, for example, di- or trichloromethane. The extraction step may further comprise agitating at room temperature for a short time. The bulk of the quaternary ammonium salt transfers into the chlorinated hydrocarbon organic layer.

In a still further embodiment, the scrubber composition may comprise adsorbent particles such as disclosed above. In this embodiment, the exhaust gas stream is thus contacted with adsorbent particles to which the fluorinated surfactant gets adsorbed. In a practical embodiment, the adsorbent particles include activated carbon particles, polyphenylenoxide (for example Tenax®), silica, clays and zeolites. In another embodiment, the adsorbent particles comprise an anion exchange resin. By holding the anion exchange resin in a wet state, the fluorinated surfactant may adsorb effectively on the anion exchange resin.

Depending on the particular scrubber composition used, the fluorinated surfactant may be recovered therefrom in a variety of ways and subsequently be purified by distillation and/or esterification to recycle the fluorinated surfactant or salt thereof in a sufficiently pure form such that it can be re-used in the polymerization of fluorinated monomers. In one embodiment, the fluorinated surfactant may be recovered from a scrubber solution by contacting the latter with adsorbent particles capable of adsorbing the fluorinated surfactant. Suitable adsorbent particles include those mentioned above.

The fluorinated surfactants that are adsorbed on an adsorbent particle may be recovered therefrom by eluting the adsorbent particles with an eluting liquid capable of extracting and dissolving the fluorinated surfactants. The nature and composition of the eluting liquid typically depends on the nature of the adsorbent particles to which the fluorinated surfactant is adsorbed and typically includes an organic solvent.

In one embodiment, the fluorinated surfactant may be recovered from strongly, medium strong or weak basic anion exchange resin particles. The terms strong, medium strong and weak basic anion exchange resin are defined in "Encyclopedia of Polymer Science and Engineering", John Wiley & Sons, 1985, volume 8, page 347 and "Kirk-Othmer", John Wiley & Sons, 3rd edition, Volume 13, page 687. Strong basic anion exchange resins typically contain quaternary ammonium groups, medium strong resins usually have tertiary amine groups and weak basic resins usually have secondary amines as the anion exchange functions.

Suitable eluting liquids for eluting the fluorinated surfactants from basic anion exchange resin particles include a mixture of a mineral acid and a water miscible organic solvent. Suitable mineral acids are all those the anions of which confer a salt form upon the anion exchanger (anion form) which is appropriate to the further adsorption of fluorinated surfactants. Under the conditions of elution their oxidation strength should generally be so low that the anion exchanger will not be damaged oxidatively. Mineral acids that can be used include, for example ortho-, meta-, and diphosphoric acid, nitric acid and preferably hydrochloric acid and sulfuric acid.

Suitable organic solvents include polar organic solvents such as, alcohols, aliphatic or aromatic ethers, nitriles, amides, sulfoxides, ketones and carboxylic acid esters. Solvents include those that are substantially miscible with water, that is miscible to at least 40% by volume when mixing equal volumes, or solvents that are completely miscible with water. Solvents of this type include aliphatic alcohols having from 1 to 4 carbon atoms, such as methanol and ethanol, as well as mono- and dimethyl ethers and mono- and diethyl ethers of ethylene glycol or of the corresponding monoethers of polyglycols having a chain length up to that of decaethylene glycol. It is likewise possible to use mixtures of the aforesaid solvents.

A typical eluting liquid may be prepared from the mineral acid and the organic solvent to be used the acid concentration of which, calculated on the total mixture, is adjusted in the range of from 0.5 to 10 N, preferably 0.5 to 2 N. In said mixture the proportion of mineral acid (including the water portion) to solvent ranges from 1:0.25 to 1:20, preferably 1:3 to 1:10 parts by volume.

For a quantitative elution of the adsorbed fluorinated surfactants 50 to 500 and preferably 100 to 225 parts by volume, calculated on 100 parts of anion exchanger matrix, of the mixture of mineral acid and organic solvent is typically used.

When the elution is terminated the eluate generally separates into two layers of which the lower layer having the higher specific gravity contains practically the entire amount of fluorinated surfactant. The lower layer may be neutralized with dilute, usually 2 N, sodium hydroxide solution and the fluorinated surfactant is typically precipitated in compact form and easy to separate by adding the neutralized phase while stirring to dilute hydrochloric acid.

In another embodiment, the eluting mixture for the elution of fluorinated surfactants adsorbed to an anion exchange resin comprises a) water, b) a compound of the formula M-X in which M is an alkali metal or alkyl ammonium ion, and X is hydroxyl, fluoride or chloride, and c) at least one organic solvent capable of dissolving the other components a) and b) and thus provides a sufficient quantity of anions X for the elution of the fluorinated surfactants from the anion exchanger resin.

In a particular aspect of this embodiment, the eluting liquid has the following composition:
a) from 15 to 40% of water,
b) from 1 to 10 of the compound M-A, and
c) from 60 to 70% of the solvent.

In another aspect, the eluting mixture has the following composition:
a) from 18 to 35% of water,
b) from 2 to 8% of M-A, and
c) from 60 to 70% of solvent.

Useful solvents include those mentioned above. Suitable cations M include lithium, sodium, potassium, tetramethylammonium and tetraethylammonium, and the preferred anion A is hydroxyl.

In yet a further embodiment, the fluorinated surfactant may be recovered from a strongly basic anion exchange resin using an eluting liquid comprising an ammonium salt and a water miscible organic solvent. The ammonium salt is typically one that corresponds to the general formula:

(NH₄)ₙA

wherein A represents an anion other than OH- and n equals the valence of A. Examples of anions A include inorganic as well as organic anions. Particular examples of inorganic anions include halogen or halogen containing inorganic anions such as for example F⁻, Cl⁻, Br⁻, I⁻, ClO₄⁻, phosphates, sulfates, sulfonates, carbonates including HCO₃⁻ and CO₃²⁻. Examples of organic anions include in particular carboxylic anions such as for example HCOO⁻ and CH₃COO⁻.

The amount of ammonium salt in the eluting liquid will generally depend on the nature of the anion exchange resin and the amount of fluorinated surfactant adsorbed on the anion exchange resin and/or the percentage of recovery that is desired. A suitable amount of ammonium salt is generally at least 0.1% by weight. According to a particular embodiment, the amount of ammonium salt is between 0.1 and 5% by weight based on the total weight of the composition used for eluting the exchange resin.

The eluting composition further includes a water-miscible solvent. By 'water miscible solvent' is generally meant an organic solvent that has solubility in water of at least 5% by weight, for example at least 10 % by weight or at least 20% by weight. Suitable water-miscible solvents are typically polar solvents including for example alcohols, ketones, ethers and mixtures thereof. Particular examples of solvents include lower alkanols having between 1 and 6 carbon atoms such as for example methanol, ethanol and propanol; glycols, mono- and dialkyl ethers or monoglycol and diglycol wherein the alkyl groups have between 1 and 4 carbon atoms; ketones such as acetone and methyl ethyl ketone. The amount of water miscible organic may vary widely but should generally be enough to dissolve the ammonium salt. The amount of water-miscible organic solvent is generally at least 50% by weight of the total weight of the eluting composition. Exemplary ranges are 50 to 99.9% by weight, or between 60 and 90% by weight or between 90 and 98% by weight.

The eluting liquid comprising the ammonium salt and a water-miscible solvent may contain further components that may aid in the recovery of the fluorinated surfactant from the anion exchange resin. In one particular embodiment, the eluting composition further comprises water. Water may for example be used in the eluting composition in an amount of up to 45% by weight, for example in an amount of 0.1 to 40% by weight or in amount between 1 and 15% by weight or in an amount between 4 and 10% by weight.

A further component that may be present in the eluting liquid is a base. Suitable bases that may be used are alkali metal hydroxides such as for example sodium hydroxide and potassium hydroxide. Other bases that may be used include earth alkali metal hydroxides, aluminium hydroxide or alkoxides such as for example sodium methoxide. When present, the amount of base included in the composition is generally up to 5% by weight. An exemplary range is from 0.1 to 5% or from 0.5 to 2% by weight.

Further eluting liquids include those disclosed in US Patent No. 6,642,415 and EP 1,323,677. The latter discloses eluting liquids comprising an alkaline mixture of water and an organic solvent. An aqueous ammonia solution as disclosed in US Patent No. 3,882,153 may also be used.

According to a further embodiment, the fluorinated surfactant may be recovered by mixing the adsorbent particles with an alcohol and optionally an acid. The mixture is then generally heated to cause esterification of the fluorinated surfactant with the alcohol so as to form an ester derivative of the fluorinated surfactant. The so obtained mixture may then be distilled to form a distillate comprising the ester derivative followed by separation of the ester derivative from the distillate. Generally, the eluting liquid will also comprise water.

Suitable alcohols that may be used include in particular lower aliphatic alcohols having 1 to 5 carbon atoms such as methanol, ethanol and propanol. However aromatic alcohols may be used as well. Additionally, the alcohol may be added under the form of a precursor of the alcohol. Such a precursor should however form an alcohol under the conditions used to cause the esterification. Suitable precursors of the alcohol may include compounds such as ketals that readily form a corresponding alcohol under the acidic conditions existing in the eluting liquid or mixture thereof with the adsorbent particles. The acid used with the eluting fluid is preferably an inorganic acid but the use of organic acids is not excluded. Also, the acid is preferably a strong acid such as for example sulphuric acid, hydrochloric acid, phosphoric acid or nitric acid. The amount and nature of the acid used is typically such that a pH of less than 4, preferably not more than 3 and more preferably not more than 2 is attained in the mixture of eluting liquid and adsorbent particles.

Depending on the amount of water present in the distillate the ester derivative may separate out as a separate phase, typically the lower phase, from the remainder of the distillate. Thus the ester derivative can be easily separated from the distillate and the remainder of the distillate can be re-introduced into the mixture being distilled. Such a circulating regeneration process thus allows a convenient regeneration of the adsorbent particles with a minimal amount of eluting fluid being needed. The received ester can be further purified by distilllation and is than converted to the fluorinated acid salt by saponification typically with ammonia. The eluated purified fluorinated surfactant salt will typically have a purity sufficient to allow use of the compound in emulsion polymerization of fluorinated monomers. The adsorbent particles can be regenerated several times before their efficiency drops below an uneconomical level at which point the adsorbent particles need to be disposed of.

The aforementioned elution methods may of course also be used in cases where the scrubber composition itself comprises adsorbent particles.

Following their recovery, the fluorinated surfactants can be purified to the desired high purity enabling re-use of the fluorinated surfactant in an aqueous emulsion polymerization. A suitable purification method is disclosed in US Patent No. 5,312,935. Herein the liberated and dewatered carboxylic acids are treated with oxidants like dichromates, peroxodisulfates or permanganates at a temperature of about 60°C to the boiling point of the mixture. The pure product is then isolated by crystallization for example at low temperature or preferably by distillation if desired under reduced pressure. Alternatively, the method of WO 2004/031141 may be used.

Embodiments of the present invention also include aqueous compositions. In some embodiments, the aqueous compositions comprise a partially fluorinated surfactant having the general formula:

[R_{f}¹-O-(CF₂)ₙ-CO₂⁻]ᵢMⁱ⁺

wherein R_{f}¹ is CF₃CFH; n is an integer selected from 1 to 6; M is a cation having a valence of i; and i is selected from 1, 2, and 3. In other embodiments, the aqueous compositions comprise a perfluorinated ethyl ether surfactant having the general formula:

[R_{f}²-O-(CF₂)ₘ-CO₂⁻]ᵢMⁱ⁺

wherein R_{f}² is CF₃CF₂; m is an integer selected from 1, 3, 4, 5, and 6; M is a cation having a valence of i; and i is selected from 1, 2, and 3. In yet further embodiments, the aqueous compositions comprise a perfluorinated butyl ether surfactant having the general formula:

[R_{f}³-O-(CF₂)ₚ-CO₂⁻]ᵢMⁱ⁺

wherein R_{f}³ is CF₃(CF₂)₃; p is an integer selected from 1, 4, and 6; M is a cation having a valence of i; and i is selected from 1, 2, and 3. The aqueous compositions may also comprise any combination of the fluorinated surfactants described above.

The aqueous compositions may be in the form, for instance, of aqueous dispersions of fluoropolymers. The fluoropolymer particles in the aqueous dispersions may have a Z-average particle diameter of, for instance, from 40 nm and higher, from 50 nm, from 100 nm, even from 200 nm. The Z-average particle diameter of the fluoropolymer particles may further have a Z-average particle diameter of, for instance, up to 400 nm, up to 300 nm, up to 200 nm, even up to 100 nm.

In some embodiments, the amount of fluoropolymer particles is between 5 and 70 weight % based on the total weight of the composition. High solids content may be obtained by upconcentraion of a dispersion resulting from emulsion polymerization. In other embodiments, the amount of fluoropolymer particles may be from 5 weight % based on the total weight of the composition and higher, from 10 weight %, from 20 weight %, even from 50 weight %. It yet further embodiments, the amount of fluoropolymer particles may be up to 70 weight % based on the total weight of the composition, up to 60 weight %, up to 50 weight %, even up to 40 weight %.

In yet further embodiments, the aqueous compositions may further comprise a non-ionic non-fluorinated surfactant. These non-ionic surfactants are described below as "stabilizing surfactants".

To obtain fluoropolymer dispersions suitable for use in preparing layered articles, such as, for example, impregnated fabrics or coating of metal substrates to make, for instance, cookware, it is generally desirable to add further stabilizing surfactants to the fluoropolymer dispersion. Typically, such stabilizing surfactants may be added in an amount of 1 to 12% by weight based on the weight of the fluoropolymer solids. Examples of non-ionic surfactants that may be added include those of the general formula:

R¹-O-[CH₂CH₂O]ₙ-[R²O]ₘ-R³

wherein, in this context, R¹ represents an aromatic or aliphatic hydrocarbon group having at least 8 carbon atoms, R² represents an alkylene having 3 carbon atoms, R³ represents hydrogen or a C1 to C3 alkyl group, n has a value of 0 to 40, m has a value of 0 to 40, and the sum of n+m is at least 2.

It will be understood that in the general formula for the non-ionic surfactants, the units indexed by n and m may appear as blocks or they may be present in alternating or random configuration. Examples of non-ionic surfactants according to the above general formula include alkylphenol oxy ethylates such as ethoxylated p-isooctylphenol, wherein the number of ethoxy units may be 15, 10, 8, 7, or even 5.

Still further examples of the non-ionic surfactants of the general formula include those in which R¹ represents an alkyl group of 4 to 20 carbon atoms, m is 0, and R³ is hydrogen. Examples thereof include isotridecanol ethoxylated with about 8 ethoxy groups. Non-ionic surfactants according to the general formula in which the hydrophilic part comprises a block-copolymer of ethoxy groups and propoxy groups may be used as well.

Accordingly, embodiments of the present invention also include a method for preparing a layered article, and layered articles prepared by the method described. Such layered articles may be prepared, for instance, by coating methods. For coating applications, when an aqueous dispersion of fluoropolymer and surfactant is desired, the fluoropolymer need not be separated or coagulated from the dispersion. Suitable surfactants for the aqueous dispersions for the method of preparing a layered article include, for instance, those described above as useful in preparing aqueous compositions according to the present application.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### EXAMPLES

### Test Methods:

The latex particle size determination was conducted by means of dynamic light scattering with a *Malvern Zetazizer 1000 HAS* in accordance with ISO/DIS 13321. Prior to the measurements, the polymer latexes as obtained from the polymerizations were diluted with 0.001 mol/L KCl-solution. The measurement temperature was 25°C in all cases. The reported average is the Z-average particle diameter.

### SSG: Standard specific gravity was measured according ASTM 4894-04

Solid Content: Determination of solid content was done by subjecting the latex sample to a temperature up to 250°C for 30 min.

**Table 1**

| **Emulsifiers** | |
|---|---|
| C₇F₁₅COONH₄ | Comparative example C1 |
| 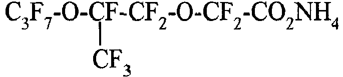 | Comparative example C2 |
| C₄F₉-O-CF₂-CF₂-COONH₄ | Example 1 |
| CF₃-CFH-O-(CF₂)₃-COONH₄ | Example 2 |
| CF₃-CFH-O-(CF₂)₅-COONH₄ | Example 3 |
| CF₃-CF₂-O-(CF₂)₅-COONH₄ | Example 4 |

### Comparative Example C1: CF₃(CF₂)₆COONH₄

Prepared from TFE telomer; straight linear material.

### Comparative Example C2:

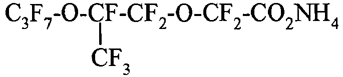

Conversion of CF₃CF₂CF₂OCF(CF₃)CF₂OCF=CF₂ to CF₃CF₂CF₂OCF(CF₃)CF₂OCF₂COOCH₃ (bp 91 - 92°C at 133 mbar) was carried out as described in US Patent No. 4,987,254. The ester was reacted with aqueous ammonia and methanol was removed by distillation resulting in CF₃CF₂CF₂OCF(CF₃)CF₂OCF₂COONH₄. All structures were confirmed by F-NMR spectra. Due to an isomer content in the vinyl ether, an isomer with the structure CF₃CF₂CF₂OCF₂CF(CF₃)OCF₂COOX (X = CH₃, NH₄) was also found.

### Example 1: C₄F₉-O-CF₂-CF₂-COONH₄

Example 1 was synthesized by reaction of perfluorobutyric acid fluoride with tetrafluoro oxethane and fluorination of the CH₂ group before conversion to the ammonium salt as per WO 2005/003075.

### Example 2: CF₃-CFH-O-(CF₂)₃COONH₄

A sample of diacid fluoride, FCOCF(CF₃)-O-(CF₂)₃COF (503 g, 1.4 mol), prepared from the HFPO coupling of perfluorosuccinyl fluoride as described in US Pub. No. US 2004/0116742 was added over 2 hours to a stirred slurry of sodium carbonate (387 g, 3.7 mol) in 650 g of diglyme at 78°C to make the disalt. The reaction liberated CO₂ gas. Distilled water (35 g, 1.9 mol) was added at 85°C. The mixture was heated up to 165°C with CO₂ off-gassing and held for 30 minutes. The reaction was cooled down and sulphuric acid (250 g, 2.6 mol) in 1250 g of water was added to make the reaction mixture acidic. To the bottom phase was added 60 g NaOH in 60 g of water. The salt was dried in a vacuum oven at 112°C/2 x 103 Pa (15 mmHg) and 450 g was recovered. To the salt was added 300 g of 50% sulphuric acid and the lower fluorochemical phase was washed once with 200 g of 50% sulphuric acid. Vacuum distillation gave CF₃-CFH-O-(CF₂)₃COOH (400 g, 1.3 mol) for a 95% yield having a boiling point of 111°C/2 x 10³ Pa (15 mmHg). The acid was treated with caustic followed by sulphuric acid and vacuum distilled. This was repeated a second time to yield a colorless acid. All structures were confirmed by ¹H and ¹⁹F NMR. The surfactant CF₃-CFH-O-(CF₂)₃COO-NH₄ having a melting point of 64 - 68 °C was made quantitatively from the reaction of 208 g of acid reacted with excess ammonium hydroxide and dried.

### Example 3: CF₃-CFH-O-(CF₂)₅COONH₄

A sample of diacid fluoride, FCOCF(CF₃)-O-(CF₂)₅COF (500 g, 1.1 mol) prepared from the hexafluoropropylene oxide (HFPO) coupling of perfluoroadipoyl fluoride as described in US Pub. No. US 2004/0116742 and was added over 2 hours to a stirred slurry of sodium carbonate (500 g, 4.7 mol) in 500 g of diglyme at 85°C to make the disalt. The reaction liberated CO₂ gas. Distilled water (25 g, 1.4 mol) was added at 85°C. The mixture was heated up to 168°C with CO₂ off-gassing and held for 30 minutes. Reaction was cooled down and sulphuric acid (350 g, 3.6 mol) in 1100 g of water was added to make the reaction mixture acidic. Bottom phase was washed with 400 g of 50 % sulfuric acid and vacuum distilled to give CF₃-CFH-O-(CF₂)₅COOH 426 g, 1.0 mol for a 95% yield having a boiling point of 132 - 135°C/15 mm. This was followed by the addition of 46 g NaOH in 63 g of water. Dried salts in vacuum oven at 112°C/2 x 10³ Pa (15 mmHg) to give 386 g of slight yellow sticky solids. To the salt was added sulphuric acid and the lower fluorochemical phase was vacuum distilled. The previous process was repeated two more times to yield a colorless acid. All structures were confirmed by ¹H and ¹⁹F NMR. The surfactant CF₃-CFH-O-(CF₂)₅COONH₄ having a melting point of 159 - 165°C was made quantitatively from the reaction of 200 g of acid reacted with excess ammonium hydroxide and dried.

### Example 4: CF₃-CF₂-O-(CF₂)₅COONH₄

A glass flask equipped with a magnetic stirrer bar, thermometer, external heating device, reflux condenser, and dropping funnel was charged with 291 g freshly distilled FOCCF(CF₃)O(CF₂)₅COF. 50.9 g SbF₅ was added at room temperature. A slow gas evolution indicated the beginning of the reaction. The batch was heated to 70 °C until no more gas evolution was noticed. An IR spectrum of the off gas showed clearly that carbon monoxide was generated. Methanol was added and the resulting crude ester was washed three times with water. The lower ester phase was separated (334 g) and analyzed by GC, showing the presence of C₂F₅O(CF₂)₅COOCH₃ (44 area %) and CH₃OOCCFCF₃O(CF₂)₅COOCH₃ (48 area %). Distillation of the crude ester resulted in 85.5 g of C₂F₅O(CF₂)₅COOCH₃ (bp 46 °C/1 x 10³ Pa (7.5 mmHg). This corresponds to an isolated yield of 32.4 %. 80 g of the distilled ester was converted to the ammonium salt by heating with aqueous ammonia. The generated methanol was removed from the aqueous phase by distillation. The aqueous ammonium salt solution can be used as an emulsifier in the polymerization of fluoropolymers. All structures were confirmed by F-NMR spectra.

### Determination of Bio-accumulation

The perfluorinated and partially fluorinated carboxylates were evaluated for urinary clearance using a pharmacokinetic study in rats. The goal was to measure the total amount of parent compound eliminated via urinary output and estimate the rate of elimination. The study was approved by the IACUC* and was performed in 3M Company's AAALAC**-accredited facility.

The study utilized male Sprague Dawley rats, 6 to 8 weeks of age, and approximately 200 to 250 g body weight at study onset. The test compounds of Table 2 were administered at a dose of 73 micro Moles per kg body weight in rats (N=3 animals per tested compound). All test compounds were prepared in sterile deionized water and given to rats via oral gavage. After test compound administration, the rats were housed individually in metabolism cages for urine collection: 0 to 6 hours, 6 to 24 hours, 24 to 48 hours and 72 to 96 hours. Animals were observed throughout the study for clinical signs of toxicity. Gross necropsy was performed at the termination of each study (96 hours post-dose) with sera and liver samples being retained from each animal.

The concentration of the parent compound or metabolites thereof were quantitatively measured via fluorine NMR on each urine sample for each animal at each time point based on internally added standards.

The bioaccumulation data obtained in accordance with the above test are reported in Table 2.
*IACUC: Institutional Animal Care and Use Committees
**AAALAC: Association for Assessment and Accreditation of Laboratory Animal Care

**Table 2**

| | T ½ (h) | % Recovery (96 h) | Compound-related Effects |
|---|---|---|---|
| C1 | ∼ 550 | 6 | Hepatomegaly |
| C2 | 95 | 5 | Hepatomegaly |
| Example 1 | 31 | 42 | Hepatomegaly |
| Example 2 | 8 | 95 | - |
| Example 3 | 24 | 32 | Hepatomegaly |

In Table 2, T_{1/2} is the time required for the amount of a particular substance in a biological system to be reduced to one half of its value by biological processes when the rate of removal is approximately exponential. In these examples the value of T_{1/2} is calculated by exponential least squares curve fitting (y = Ae^{Bx} and T_{1/2} = 0.693/B) where y represents the concentration of analyte in urine and x represents time in hours.

### Polymerization General Description

The polymerization experiments were performed in a 401 kettle equipped with an impeller agitator and a baffle. The kettle was charged with 30 of deionized water and set to 35 °C. The kettle was evacuated repeatedly to remove oxygen and agitation speed was set to 165 rpm. The oxygen free kettle was charged with 70 mmol fluorinated emulsifier (unless specified differently) as listed in Table 3 and the following materials were added: 0.5 ml of a solution containing 40 mg of copper sulphate penta hydrate and 1 mg of conc. sulphuric acid; 15 g of a 25 w-% of aqueous ammonia solution and 5.6 g of PPVE-2 (synthesized by trimerization of HFPO, conversion of the acid fluoride to an alkali salt and pyrolysis of the dry salt as described in Angew. Chem., 24, 161-179, 1985). Finally the reactor was pressurized with TFE to 0.2 MPa and 47 g of HFP was added. The kettle was then set to 1.5 MPa using TFE and 100 ml of an aqueous initiator solution containing 140 mg of sodium disulfite followed by 100 ml of a solution containing 340 mg of ammonium peroxodisulfate was pumped into the reactor. The beginning of the polymerization was indicated by a pressure drop. During polymerization the pressure was maintained at 1.5 MPa by feeding TFE continuously. After 3.2 kg of TFE had been added, the monomer valve was closed and the pressure was released. The characteristics of the obtained polymer latices are summarized in Table 3.

1000 ml of this polymer dispersion were coagulated by adding 20 ml hydrochloric acid under agitation. The coagulated material was agglomerated with gasoline and washed repeatedly. The agglomerated polymer was dried overnight at 200 °C in a vacuum oven; test data are given in Table 3.

**Table 3**

| | C1 | C2 | EX1 | EX2 | EX3 (140 mmol) |
|---|---|---|---|---|---|
| Polymerization time (min) | 101 | 87 | 72 | 78 | 75 |
| Average Particle Size (nm) | 111 | 113 | 113 | 105 | 127 |
| SSG (g/cm³) | 2.166 | 2.149 | 2.165 | 2.154 | 2.151 |
| Solid content (w-%) | 9.9 | 10.3 | 10.2 | 10.0 | 8.1 |

Various modifications and alterations of the invention may be made by those skilled in the art without departing from the scope and spirit of the invention, and it should be understood that this invention is not to be unduly limited to the illustrative examples.

## Claims

1. A surfactant for emulsion polymerization comprising a fluorinated ether carboxylic acid or acid derivative selected from:
a) a partially fluorinated surfactant having the general formula:
[R_{f}¹-O(CF₂)ₙ-CO₂-]ᵢMⁱ⁺
wherein R_{f}¹ is CF₃CFH; n is an integer selected from 1, 2, 5, and 6; M is a cation having a valence of i; and i is selected from 1, 2, and 3,
b) a perfluorinated ethyl ether surfactant having the general formula:
[R_{f}²-O-(CF₂)ₘ-CO₂⁻]ᵢMⁱ⁺
wherein R_{f}³ is CF₃CF₂; m is an integer selected from 1, 3, 4, and 6; M is a cation having a valence of i; and i is selected from 1, 2, and 3, and
c) a perfluorinated butyl ether surfactant having the general formula:
[R_{f}³-O-(CF₂)ₚ-CO₂⁻]ᵢMⁱ⁺
wherein R_{f}³ is CF₃(CF₂)₃; p is an integer selected from 1, 4, and 6; M is a cation having a valence of i; and i is selected from 1, 2, and 3.

2. The surfactant of claim 1, wherein the surfactant is the partially fluorinated surfactant and wherein n is selected from 5 and 6.

3. The surfactant of claim 1, wherein the surfactant is the perfluorinated ethyl ether surfactant and wherein n is selected from 3, 4, 5, and 6.

4. The surfactant of claim 1, wherein the surfactant is the perfluorinated butyl ether surfactant and wherein p is selected from 4 and 6.

5. The surfactant of claim 1, wherein the surfactant has a renal elimination half-life of the surfactant from a male rat of 35 hours or less.

6. The surfactant of claim 1, wherein the surfactant does not undergo metabolic degradation and is has a recovery ratio from a male rat of 30% or greater via renal elimination 96 hours from dose.

7. An aqueous composition comprising a fluorinated surfactant selected from:
a) a partially fluorinated surfactant having the general formula:
[R_{f}¹-O-(CF₂)ₙ-CO₂⁻]ᵢMⁱ⁺
wherein R_{f}¹ is CF₃CFH; n is an integer selected from 1 to 6; M is a cation having a valence of i; and i is selected from 1, 2, and 3,
b) a perfluorinated ethyl ether surfactant having the general formula:
[R_{f}²-O-(CF₂)ₘ-CO₂⁻]ᵢMⁱ⁺
wherein R_{f}³ is CF₃CF₂; m is an integer selected from 1, 3, 4, 5, and 6; M is a cation having a valence of i; and i is selected from 1, 2, and 3, and
c) a perfluorinated butyl ether surfactant having the general formula:
[R_{f}³-O-(CF₂)ₚ-CO₂⁻]ᵢMⁱ⁺
wherein R_{f}³ is CF₃(CF₂)₃; p is an integer selected from 1, 4, and 6; M is a cation having a valence of i; and i is selected from 1, 2, and 3.

8. The aqueous composition of claim 7, further comprising fluoropolymer particles.

9. The aqueous composition of claim 8, wherein the fluoropolymer particles have a Z-average particle diameter of 40 to 400 nm.

10. The aqueous composition of claim 8, wherein the amount of fluoropolymer particles is between 5 and 70 weight % based on the total weight of the composition.

11. The aqueous composition of claim 7, further comprising a non-ionic non-fluorinated surfactant.

12. A method for preparing a layered article, comprising applying an aqueous composition according to claim 7 to a substrate.

13. A process for preparing a fluoropolymer dispersion comprising polymerizing in an aqueous emulsion, one or more fluorinated monomers, wherein the polymerizing is carried out in the presence of one or more fluorinated surfactants selected from:
a) a partially fluorinated surfactant having the general formula:
[R_{f}¹-O-(CF₂)ₙ-CO₂]ᵢM¹⁺
wherein R_{f}¹ is CF₃CFH; n is an integer selected from 1 to 6; M is a cation having a valence of i; and i is selected from 1, 2, and 3,
b) a perfluorinated ethyl ether surfactant having the general formula:
[R_{f}²-O-(CF₂)ₘ-CO₂⁻]ᵢMⁱ⁺
wherein R_{f}³ is CF₃CF₂; m is an integer selected from 1, 3, 4, 5, and 6; M is a cation having a valence of i; and i is selected from 1, 2, and 3, and
c) a perfluorinated butyl ether surfactant having the general formula:
[R_{f}³-O-(CF₂)ₚ-CO₂⁻]ᵢMⁱ⁺
wherein R_{f}³ is CF₃(CF₂)₃; p is an integer selected from 1, 4, and 6; M is a cation having a valence of i; and i is selected from 1, 2, and 3.

14. The process of claim 13, wherein the amount of the one or more fluorinated surfactants is between 0.001 and 5% by weight based on the amount of water in the aqueous emulsion.

15. The process of claim 13, wherein the aqueous emulsion further comprises one or more fluorinated surfactants other than the fluorinated surfactants defined in claim 13, for example, a fluorinated surfactant comprising a perfluorinated polyether surfactant, or wherein the aqueous emulsion further comprises one or more non-fluorinated surfactants.

## Patentansprüche

1. Tensid zur Emulsionspolymerisation, umfassend eine fluorierte Ethercarbonsäure oder ein Säurederivat ausgewählt aus:
a) einem teilweise fluorierten Tensid mit der allgemeinen Formel:
[R_{f}¹-O-(CF₂)ₙ-CO₂-]ᵢMⁱ⁺
wobei R_{f}¹ CF₃CFH ist; n eine ganze Zahl ausgewählt aus 1, 2, 5 und 6 ist; M ein Kation mit einer Wertigkeit von i ist; und i ausgewählt ist aus 1, 2 und 3,
b) einem perfluorierten Ethylethertensid mit der allgemeinen Formel:
[R_{f}²-O-(CF₂)ₘ-CO₂-]ᵢMⁱ⁺
wobei R_{f}² CF₃CF₂ ist; m eine ganze Zahl ausgewählt aus 1, 3, 4 und 6 ist; M ein Kation mit einer Wertigkeit von i ist; und i ausgewählt ist aus 1, 2 und 3, und
c) einem perfluorierten Butylethertensid mit der allgemeinen Formel:
[R_{f}³-O-(CF₂)ₚ-CO₂-]ᵢMⁱ⁺
wobei R_{f}³ CF₃(CF₂)₃ ist; p eine ganze Zahl ausgewählt aus 1, 4 und 6 ist; M ein Kation mit einer Wertigkeit von i ist; und i ausgewählt ist aus 1, 2 und 3.

2. Tensid nach Anspruch 1, wobei das Tensid das teilweise fluorierte Tensid ist und n ausgewählt ist aus 5 und 6.

3. Tensid nach Anspruch 1, wobei das Tensid das perfluorierte Ethylethertensid ist und wobei n ausgewählt ist aus 3, 4, 5 und 6.

4. Tensid nach Anspruch 1, wobei das Tensid das perfluorierte Butylethertensid ist und wobei p ausgewählt ist aus 4 und 6.

5. Tensid nach Anspruch 1, wobei das Tensid eine Halbwertzeit der renalen Eliminierung des Tensids aus einer männlichen Ratte von 35 Stunden oder weniger aufweist.

6. Tensid nach Anspruch 1, wobei das Tensid keinen metabolischen Abbau erfährt und ein Wiederfindungsverhältnis aus einer männlichen Ratte von 30 % oder mehr mittels renaler Eliminierung 96 Stunden ab Dosis aufweist.

7. Wässrige Zusammensetzung, umfassend ein fluoriertes Tensid ausgewählt aus:
a) einem teilweise fluorierten Tensid mit der allgemeinen Formel:
[R_{f}¹-O-(CF₂)ₙ-CO₂-]ᵢMⁱ⁺
wobei R_{f}¹ CF₃CFH ist; n eine ganze Zahl ausgewählt aus 1 bis 6 ist; M ein Kation mit einer Wertigkeit von i ist; und i ausgewählt ist aus 1, 2 und 3,
b) einem perfluorierten Ethylethertensid mit der allgemeinen Formel:
[R_{f}²-O-(CF₂)ₘ-CO₂-]ᵢMⁱ⁺
wobei R_{f}² CF₃CF₂ ist; m eine ganze Zahl ausgewählt aus 1, 3, 4, 5 und 6 ist; M ein Kation mit einer Wertigkeit von i ist; und i ausgewählt ist aus 1, 2 und 3, und
c) einem perfluorierten Butylethertensid mit der allgemeinen Formel:
[R_{f}³-O-(CF₂)ₚ-CO₂-]ᵢMⁱ⁺
wobei R_{f}³ CF₃(CF₂)₃ ist; p eine ganze Zahl ausgewählt aus 1, 4 und 6 ist; M ein Kation mit einer Wertigkeit von i ist; und i ausgewählt ist aus 1, 2 und 3.

8. Wässrige Zusammensetzung nach Anspruch 7, ferner umfassend Fluorpolymerpartikel.

9. Wässrige Zusammensetzung nach Anspruch 8, wobei die Fluorpolymerpartikel einen Partikeldurchmesser (Z-Mittel) von 40 bis 400 nm aufweisen.

10. Wässrige Zusammensetzung nach Anspruch 8, wobei die Menge der Fluorpolymerpartikel zwischen 5 und 70 Gew.-% liegt, bezogen auf das Gesamtgewicht der Zusammensetzung.

11. Wässrige Zusammensetzung nach Anspruch 7, ferner umfassend ein nichtionisches nichtfluoriertes Tensid.

12. Verfahren zur Herstellung eines geschichteten Artikels, umfassend Aufbringen einer wässrigen Zusammensetzung nach Anspruch 7 auf ein Substrat.

13. Verfahren zur Herstellung einer Fluorpolymerdispersion, umfassend Polymerisieren von einem oder mehreren fluorierten Monomeren in einer wässrigen Emulsion, wobei das Polymerisieren unter Vorhandensein von einem oder mehreren fluorierten Tensiden durchgeführt wird, die ausgewählt sind aus:
a) einem teilweise fluorierten Tensid mit der allgemeinen Formel:
[R_{f}¹-O-(CF₂)ₙ-CO₂]ᵢMⁱ⁺
wobei R_{f}¹ CF₃CFH ist; n eine ganze Zahl ausgewählt aus 1 bis 6 ist; M ein Kation mit einer Wertigkeit von i ist; und i ausgewählt ist aus 1, 2 und 3,
b) einem perfluorierten Ethylethertensid mit der allgemeinen Formel:
[R_{f}²-O-(CF₂)ₘ-CO₂-]ᵢMⁱ⁺
wobei R_{f}² CF₃CF₂ ist; m eine ganze Zahl ausgewählt aus 1, 3, 4, 5 und 6 ist; M ein Kation mit einer Wertigkeit von i ist; und i ausgewählt ist aus 1, 2 und 3, und
c) einem perfluorierten Butylethertensid mit der allgemeinen Formel:
[R_{f}³-O-(CF₂)ₚ-CO₂-]ᵢMⁱ⁺
wobei R_{f}³ CF₃(CF₂)₃ ist; p eine ganze Zahl ausgewählt aus 1, 4 und 6 ist; M ein Kation mit einer Wertigkeit von i ist; und i ausgewählt ist aus 1, 2 und 3.

14. Verfahren nach Anspruch 13, wobei die Menge des einen oder der mehreren fluorierten Tenside zwischen 0,001 und 5 Gew.-% liegt, bezogen auf die Menge an Wasser in der wässrigen Emulsion.

15. Verfahren nach Anspruch 13, wobei die wässrige Emulsion ferner ein oder mehrere fluorierte Tenside umfasst, die von den in Anspruch 13 definierten fluorierten Tensiden verschieden sind, beispielsweise ein fluoriertes Tensid, das ein perfluoriertes Polyethertensid umfasst, oder wobei die wässrige Emulsion ferner ein oder mehrere nichtfluorierte Tenside umfasst.

## Revendications

1. Agent tensioactif pour une polymérisation en émulsion comprenant un acide carboxylique d'éther fluoré ou un dérivé d'acide choisi parmi :
a) un agent tensioactif partiellement fluoré ayant la formule générale :
[R_{f}¹-O-(CF₂)ₙ-CO₂-]ᵢMⁱ⁺
dans laquelle R_{f}¹ est CF₃CFH ; n est un nombre entier choisi parmi 1, 2, 5 et 6 ; M est un cation ayant une valence de i ; et i est choisi parmi 1, 2 et 3,
b) un agent tensioactif d'éther d'éthyle perfluoré ayant la formule générale :
[R_{f}²-O-(CF₂)ₘ-CO₂-]ᵢMⁱ⁺
dans laquelle R_{f}² est CF₃CF₂ ; m est un nombre entier choisi parmi 1, 3, 4 et 6 ; M est un cation ayant une valence de i ; et i est choisi parmi 1, 2 et 3 et
c) un agent tensioactif d'éther de butyle perfluoré ayant la formule générale :
[R_{f}³-O-(CF₂)ₚ-CO₂-]ᵢMⁱ⁺
dans laquelle R_{f}³ est CF₃(CF₂)₃ ; p est un nombre entier choisi parmi 1, 4 et 6 ; M est un cation ayant une valence de i ; et i est choisi parmi 1, 2 et 3.

2. Agent tensioactif de la revendication 1, dans lequel l'agent tensioactif est l'agent tensioactif partiellement fluoré et dans lequel n est choisi parmi 5 et 6.

3. Agent tensioactif de la revendication 1, dans lequel l'agent tensioactif est l'agent tensioactif d'éther d'éthyle perfluoré et dans lequel n est choisi parmi 3, 4, 5 et 6.

4. Agent tensioactif de la revendication 1, dans lequel l'agent tensioactif est l'agent tensioactif d'éther de butyle perfluoré et dans lequel p est choisi parmi 4 et 6.

5. Agent tensioactif de la revendication 1, dans lequel l'agent tensioactif a une demi-vie d'élimination rénale de l'agent tensioactif d'un rat mâle de 35 heures ou moins.

6. Agent tensioactif de la revendication 1, dans lequel l'agent tensioactif ne subit pas une dégradation métabolique et a un taux de récupération d'un rat mâle de 30 % ou supérieur via une élimination rénale de 96 heures après la dose.

7. Composition aqueuse comprenant un agent tensioactif fluoré choisi parmi :
a) un agent tensioactif partiellement fluoré ayant la formule générale :
[R_{f}¹-O-(CF₂)ₙ-CO₂-]ᵢMⁱ⁺
dans laquelle R_{f}¹ est CF₃CFH ; n est un nombre entier choisi de 1 à 6 ; M est un cation ayant une valence de i ; et i est choisi parmi 1, 2 et 3,
b) un agent tensioactif d'éther d'éthyle perfluoré ayant la formule générale :
[R_{f}²-O-(CF₂)ₘ-CO₂]ᵢMⁱ⁺
dans laquelle R_{f}² est CF₃CF₂ ; m est un nombre entier choisi parmi 1, 3, 4, 5 et 6 ; M est un cation ayant une valence de i ; et i est choisi parmi 1, 2 et 3, et
c) un agent tensioactif d'éther de butyle perfluoré ayant la formule générale :
[R_{f}³-O-(CF₂)ₚ-CO₂-]ᵢMⁱ⁺
dans laquelle R_{f}³ est CF₃(CF₂)₃ ; p est un nombre entier choisi parmi 1, 4 et 6 ; M est un cation ayant une valence de i ; et i est choisi parmi 1, 2 et 3.

8. Composition aqueuse de la revendication 7, comprenant en outre des particules de fluoropolymère.

9. Composition aqueuse de la revendication 8, dans laquelle les particules de fluoropolymère ont un diamètre de particule moyen Z de 40 à 400 nm.

10. Composition aqueuse de la revendication 8, dans laquelle la quantité de particules de fluoropolymère est entre 5 et 70 % en poids par rapport au poids total de la composition.

11. Composition aqueuse de la revendication 7, comprenant en outre un agent tensioactif non fluoré non ionique.

12. Procédé pour la préparation d'un article stratifié, comprenant l'application d'une composition aqueuse selon la revendication 7 à un substrat.

13. Procédé pour la préparation d'une dispersion de fluoropolymère comprenant la polymérisation dans une émulsion aqueuse, d'un ou plusieurs monomères fluorés, dans lequel la polymérisation est effectuée en présence d'un ou plusieurs agents tensioactifs fluorés choisis parmi :
a) un agent tensioactif partiellement fluoré ayant la formule générale :
[R_{f}¹-O-(CF₂)ₙ-CO₂]ᵢMⁱ⁺
dans laquelle R_{f}¹ est CF₃CFH ; n est un nombre entier choisi de 1 à 6 ; M est un cation ayant une valence de i ; et i est choisi parmi 1, 2 et 3,
b) un agent tensioactif d'éther d'éthyle perfluoré ayant la formule générale :
[R_{f}²-O-(CF₂)ₘ-CO₂-]ᵢMⁱ⁺
dans laquelle R_{f}² est CF₃CF₂ ; m est un nombre entier choisi parmi 1, 3, 4, 5 et 6 ; M est un cation ayant une valence de i ; et i est choisi parmi 1, 2 et 3 et
c) un agent tensioactif d'éther de butyle perfluoré ayant la formule générale :
[R_{f}³-O-(CF₂)ₚ-CO₂-]ᵢMⁱ⁺
dans laquelle R_{f}³ est CF₃(CF₂)₃ ; p est un nombre entier choisi parmi 1, 4 et 6 ; M est un cation ayant une valence de i ; et i est choisi parmi 1, 2 et 3.

14. Procédé de la revendication 13, dans lequel la quantité du ou de plusieurs agents tensioactifs fluorés est entre 0,001 et 5 % en poids par rapport à la quantité d'eau dans l'émulsion aqueuse.

15. Procédé de la revendication 13, dans lequel l'émulsion aqueuse comprend en outre un ou plusieurs agents tensioactifs fluorés autres que les agents tensioactifs fluorés définis dans la revendication 13, par exemple, un agent tensioactif fluoré comprenant un agent tensioactif de polyéther perfluoré, ou dans lequel l'émulsion aqueuse comprend en outre un ou plusieurs agents tensioactifs non fluorés.
